# EUROPEAN PATENT SPECIFICATION

(11) **EP 3 480 083 B1**
(45) Date of publication and mention of the grant of the patent: **12.11.2025**
(21) Application number: 18194102.2
(22) Date of filing: 12.09.2018
(51) Int. Cl.: B62D 15/02, B62D 5/00

(54) **STEERING ARRANGEMENT**
LENKANORDNUNG
AGENCEMENT DE DIRECTION

(30) Priority: 15.09.2017 DE 102017121458
(43) Date of publication of application: 08.05.2019
(73) Proprietor: Danfoss Power Solutions Aps, 6430 Nordborg (DK)
(72) Inventor: RASMUSSEN, Søren Winkler, 6430 Nordborg (DK)
(74) Representative: Keil & Schaafhausen Patentanwälte PartGmbB

(56) References cited:
- WO-A1-2017/069888
- JP-A- 2006 089 015
- JP-A- H11 125 537
- US-A1- 2003 052 638
- US-A1- 2008 272 669
- US-A1- 2014 151 145
- US-A1- 2016 149 476
- US-B1- 6 484 838

## Description

The present invention relates to a steering arrangement according to the preamble of claim 1

Such a steering arrangement is known from EP 1 075 412 B1. When the steering command device is actuated the motor is operated as generator and produces a voltage which is proportional to a speed of the rotor of the motor and contains an information about direction. This signal can then be integrated to give an anguar position. The integration of a speed signal to give position is not an absolute reference. It means that the position can drift even if the angle is not moved physically.

WO 2017/069888 A1 discloses a steering controller for precision farming having a multi-pole-motor and an angle sensor including an encoder disc and an angle encoder to sense the angular position of the rotating components of the steering controller.

JP H11-125537 A discloses a vehicle steering angle detection apparatus detecting a steering angle of a steering wheel using a generator. The generator is formed by a rotating magnet which cooperates with a set of coils. The magnet is driven by a transmission mechanism having two star wheels with different diameters.

JP 2006-089015 A shows a vehicle power steering apparatus having an electric steering drive which is connected to a steering wheel by two sections of a steering column. The two sections of the steering column are connected by a reaction force reducing motor and a speed reducer. A steering angle sensor is disposed between the reaction force reducing motor and the speed reducer.

Different electric motors are known from US 2008/272669 A1, US 2003/052638 A1, US 2014/151145 A1, and US 2016/149476 A1.

In a steering arrangement it is very important to have an absolute position.

The object underlying the invention is to provide a particularly precise and reliable measurement of the steering angle of a steering command device.

This object is solved with a steering arrangement as defined in claim 1.

A way how to obtain an angle information, i.e. an information about the angular position of the rotor of the motor, is described in US 6 448 725 B1. However, in the steering arrangement according to embodiments of the present invention the motor is used without activating it, i.e. without driving it. The motor is used to give a sensor output instead of using a signal to control the motor as in US 6 448 725 B1. The sensor output signal can also be used outside of the sensor. It can, for example, be sent on a CAN-bus on a vehicle to be steered by the steering arrangement and can be used for other purposes on the respective vehicle.

In an embodiment of the invention the magnetic properties are derived by voltage and/or current measurement. This can be the wave form of the voltage and/or current produced by the motor during rotation which is caused by a movement of the steering command device. It is also possible to supply electric energy to the motor without or with activating it, i.e. without rotating it or with generation of a feedback force, and to measure the reaction of the supply voltage and/or current to the generated voltage and/or current.

In an embodiment of the invention the motor controller means comprise a driving mode in which the electric motor is supplied with electric energy. In this way it is possible to use the motor to create force feedback on the steering command device. If one would like to have force feedback then the angular position of the steering command device is obtained for free without the need for a separate sensor.

According to the invention, the electric motor is a multipole-motor. This has the advantage that the resolution of the signal representing the angular position of the steering command device is increased. The more poles are available, the better is the resolution.

In an embodiment of the invention the electric motor has at least twelve pole pairs. This allows a resolution of 30° per pole pair. In a preferred embodiment the electric motor comprises eighteen pole pairs.

According to the invention, the electric motor comprises at least two groups of motor windings and the motor controller means comprise a corresponding number of motor controllers. In this way it is possible to make the steering arrangement functional safe by splitting the motor windings to at least two independent motor controllers. This will give full redundancy on the position sensing and, when a force feedback is used, to half power redundancy on the force feedback.

According to the invention, an angle sensor is provided in addition to the angle detector, the angle sensor sensing a steering angle given by the steering command device. The angle sensor and the angle detector basically perform the same function, i.e. they detect the steering angle given by the steering command device. The steering angle is transmitted to a rotary position of the rotor of the motor which can be sensed or detected by the angle detector. Furthermore, according to the invention, the steering angle of the steering command device is sensed directly at the steering command device.

According to the invention the angle sensor is located radially inside the motor windings. Therefore, the angle sensor does not need much additional space, if any.

In an embodiment of the invention the angle sensor comprises a transmitter/receiver arrangement fixed to the housing and a target assembly which is rotatably fixed to the steering command device and comprises a passive reaction arrangement. This means that only passive parts are fixed to the moveable part of the steering command device and, for example, rotates when the steering command device is actuated. It is, for example, possible to use a transmitter/receiver arrangement which generates an electrical field with a high frequency to produce a resonance reaction in the target. When the target is excited to resonate, it generates a counter field which can be received by the receiver of the transmitter/receiver arrangement. The received signal can be divided in a sine part and a cosine part. From these two parts of the signal it is possible to detect the angle of a steering command device.

According to the invention, the steering command device comprises a wheel having a rim and a shaft, wherein the rim cooperates with the motor and the shaft cooperates with the angle sensor. In this way it is possible to obtain the information about the angular position of the steering wheel from two different radial locations on the wheel.

In an embodiment of the invention the electric motor is a Brushless Direct Current motor (BLDC). In a brushless direct current motor the information about the angular position of the rotor is necessary to control the operation of the motor. This information can now be used to output a commanded steering angle, i.e. the angle given by the steering command device.

An embodiment of the invention will now be explained in more detail with reference to the drawing, in which:
Fig. 1 shows a schematic cross-sectional view of a steering command device and
Fig. 2 shows a perspective view of parts of the steering command device from the bottom side.

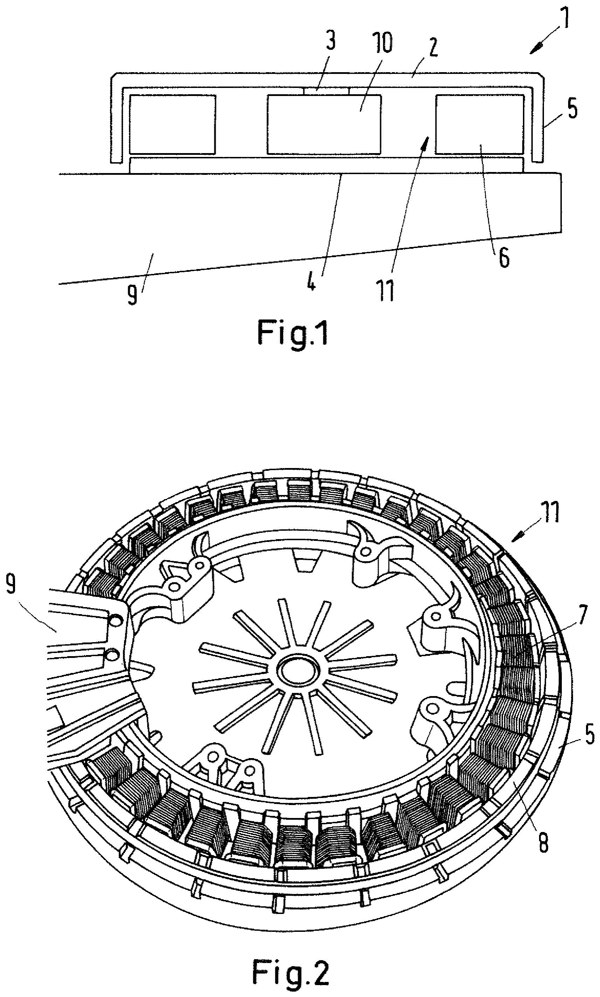

Fig. 1 schematically shows a steering command device 1 which is part of a steering arrangement. The steering command device 1 is in the present embodiment in form of a steering wheel, more precisely in form of a mini wheel 2. The mini wheel 2 comprises a shaft 3 which is rotatably supported in a housing 4. Furthermore, the mini wheel 2 comprises a rim 5 extending parallel to the shaft 3.

Inside the rim a stator 6 of a brushless direct current (BLDC) motor 11 is arranged. The stator 6 is mounted in the housing 4 as well and is therefore stationary. The stator 6 comprises a number of stator windings 7. Two stator windings 7 together form a pole pair. As can be seen in Fig. 2, the brushless direct current motor comprises 18 pole pairs corresponding to 36 motor windings 7.

The rim 5 carries a corresponding number of permanent magnets 8.

The housing 4 is mounted to an arm rest 9 of a vehicle to be steered by the steering arrangement.

In a way not shown the windings 7 of the stator 6 are connected to motor controller means. In the present embodiment the motor controller means comprise two motor controllers, each motor controller being connected to a half of the windings 7, i.e. to a half of the pole pairs of the motor.

When the mini wheel 2 is rotated relatively to the housing 4 a current is induced in each winding 7. Since, like in the present embodiment, the number of pole pairs is a multiple of three, a three-phase current and a corresponding three-phase voltage can be produced, wherein the offset between the phases is 120° electric. It is therefore possible to derive an information about the angular position of the mini wheel 2 relative to the housing 4 by comparing the respective outputted signals with each other. One way to achieve this result is disclosed in US 6 448 725 B1. However, in the present embodiment the motor is not activated, i.e. it is not controlled by the motor controller means to rotate, but the motor controller means just evaluate the voltages and/or currents induced by a rotation of the mini wheel 2 relative to the housing 4.

In other words, by measurement of voltage and/or current induced in the windings, it is possible to detect the magnetic properties of the electric motor and to derive the angular position information from the magnetic properties.

In a brushless direct current motor an information about the position of the rotor relative to the stator is needed for a correct control of the brushless direct current motor. In the present case, this information can be used to get an information about the desired steering angle, i.e. about the angular position of mini wheel 2 relative to the housing 4.

The two motor controllers make the steering command device 1 functional safe, since they give full redundancy on the position sensing.

Furthermore, the motor controller means can be operated to supply electric energy to the motor. When energy is supplied to the motor, a force feedback can be created to signal a driver of the vehicle that external forces act on the steered wheel. When the brushless direct current motor is used for this purpose, the angle information is obtained for free.

In addition to the motor which acts as angle detector, an angle sensor 10 is provided. The angle sensor 10 is connected to the shaft 3 of the mini wheel 2 and senses a steering angle given by the mini wheel 2.

As can be seen in Fig. 1, the angle sensor 10 is located radially inside the motor windings 7 and in the present embodiment radially inside the stator 6.

In a way not show, the angle sensor 10 comprises a target connected to the shaft 3 of the mini wheel 2. A part of the angle sensor 10 which is connected to the housing 4 comprises a transmitter/receiver arrangement having at least an exciting coil as transmitting means and a couple of receiving coils as receiving means. For further details it is referred to US 5 625 238, the disclosure of which is incorporated here by reference.

Consequently, the target is a passive reaction arrangement having no active parts. When the exciting coil is supplied with a voltage of a high frequency, e.g. 2 MHz, it generates an electrical field inducing a current in the coil on the target. This current produces a counter field which is detected by the receive coils.

As mentioned above, motor controller means comprise two motor controllers. This means that the device is made functional safe by splitting the windings 7 to two independent motor controllers. This will give full redundancy on the position sensing and half power redundancy on the force feedback.

When the motor 11 comprises two groups of motor windings 7 which are connected to two separate motor controllers, an extra angle sensor 10 can be omitted.

The principle described can also be used in connection with joysticks and ordinary steering wheels. When a mini wheel 2 is used, a preferred embodiment of the motor 11 is a flat pancake motor with many poles. A joystick will typically require a longer motor with less diameter and a conventional steering wheel having a larger diameter can be used together with a motor with many poles.

In a mini wheel 2, there are typically 16, 24, 30, 36, or 42 poles. In a joystick, it is preferred to use 6 (embodiment not claimed), 12, 18, or 24 poles, and in a steering wheel it is preferred to use 36, 42, 48, 54, 60, 66, or 72 poles.

## Claims

1. Steering arrangement comprising a housing (4), a steering command device (1) and an angle detector comprising an electric motor (11) having motor windings (7) and motor controller means, wherein the rotor of the motor (7) is in operative connection with the steering command device (1) and can be operated as generator, wherein the motor controller means derive an angle signal from magnetic properties of the electric motor (11), wherein the steering command device (1) comprises a wheel (2) having a shaft (3),
**characterized in that** the electric motor (11) is a multipolepair-motor and comprises at least two groups of motor windings (7) and the motor controller means comprise a corresponding number of motor controllers,
wherein steering arrangement is configured such that the motor controllers give full redundancy on the position sensing with the electric motor (11),
wherein an angle sensor (10) is provided in addition to the angle detector, the angle sensor (10) sensing a steering angle given by the steering command device (1) directly at the steering command device (10),
wherein the wheel (2) further has a rim (5), wherein the rim (5) cooperates with the electric motor (11) and shaft (3) cooperates with the angle sensor (10), and wherein the angle sensor (10) is located radially inside the motor windings (7).

2. Steering arrangement according to claim 1, **characterized in that** the magnetic properties are derived by voltage and/or current measurement.

3. Steering arrangement according to claim 1 or 2, **characterized in that** the motor controller means comprise a driving mode in which the electric motor (11) is supplied with electric energy.

4. Steering arrangement according to any of claims 1 to 3, **characterized in that** the electric motor (11) has at least twelve pole pairs.

5. Steering arrangement according to any of claims 1 to 4, **characterized in that** the angle sensor (10) comprises a transmitter/receiver arrangement fixed to the housing (4) and a target assembly which is rotatably fixed to the steering command device (1) and comprises a passive reaction arrangement.

6. Steering arrangement according to any of claims 1 to 5, **characterized in that** the electric motor (11) is a brushless direct current motor.

## Patentansprüche

1. Lenkungsanordnung mit einem Gehäuse (4), einer Lenkbefehlsvorrichtung (1) und einem Winkeldetektor, umfassend einen Elektromotor (11) mit Motorwicklungen (7) und einer Motorsteuerungsmittel, wobei der Rotor des Motors (7) in Wirkverbindung mit der Lenkbefehlsvorrichtung (1) steht und als Generator betrieben werden kann, wobei die Motorsteuerungsmittel ein Winkelsignal aus den magnetischen Eigenschaften des Elektromotors ableitet (11) ableitet, wobei die Lenkbefehlvorrichtung (1) ein Rad (2) mit einer Welle (3) umfasst,
**dadurch gekennzeichnet, dass** der Elektromotor (11) ein Multipolpaar-Motor ist und mindestens zwei Gruppen von Motorwicklungen (7) umfasst und die Motorsteuerungsmittel eine entsprechende Anzahl von Motorsteuerungen umfassen,
wobei die Lenkungsanordnung dazu eingerichtet ist, dass die Motorsteuerungen eine vollständige Redundanz bei der Positionserfassung mit dem Elektromotor (11) bieten,
wobei zusätzlich zu dem Winkeldetektor ein Winkelsensor (10) vorgesehen ist, der einen von der Lenkbefehlvorrichtung (1) vorgegebenen Lenkwinkel direkt an der Lenkbefehlvorrichtung (10) erfasst,
wobei das Rad (2) ferner eine Kranz (5) aufweist, wobei der Kranz (5) mit dem Elektromotor (11) zusammenwirkt und die Welle (3) mit dem Winkelsensor (10) zusammenwirkt, und wobei der Winkelsensor (10) radial innerhalb der Motorwicklungen (7) angeordnet ist.

2. Lenkungsanordnung nach Anspruch 1, **dadurch gekennzeichnet, dass** die magnetischen Eigenschaften durch Spannungs- und/oder Strommessung abgeleitet werden.

3. Lenkungsanordnung nach Anspruch 1 oder 2, **dadurch gekennzeichnet, dass** die Motorsteuerungsmittel einen Antriebsmodus umfassen, in dem der Elektromotor (11) mit elektrischer Energie versorgt wird.

4. Lenkungsanordnung nach einem der Ansprüche 1 bis 3, **dadurch gekennzeichnet, dass** der Elektromotor (11) mindestens zwölf Polpaare aufweist.

5. Lenkungsanordnung nach einem der Ansprüche 1 bis 4, **dadurch gekennzeichnet, dass** der Winkelsensor (10) eine an dem Gehäuse (4) befestigte Sende-/Empfangsanordnung und eine Zielbaugruppe umfasst, die drehbar an der Lenkbefehlsvorrichtung (1) befestigt ist und eine passive Reaktionsanordnung umfasst.

6. Lenkungsanordnung nach einem der Ansprüche 1 bis 5, **dadurch gekennzeichnet, dass** der Elektromotor (11) ein bürstenloser Gleichstrommotor ist.

## Revendications

1. Agencement de direction comprenant un boîtier (4), un dispositif d'instruction de direction (1) et un détecteur d'angle comprenant un moteur électrique (11) ayant des enroulements de moteur (7) et des moyens de commande de moteur, où le rotor du moteur (7) est en liaison fonctionnelle avec le dispositif d'instruction de direction (1) et peut fonctionner en tant que générateur, où les moyens de commande de moteur dérivent un signal d'angle des propriétés magnétiques du moteur électrique (11), où le dispositif d'instruction de direction (1) comprend une roue (2) ayant un arbre (3),
**caractérisé en ce que** le moteur électrique (11) est un moteur à plusieurs paires de pôles et comprend au moins deux groupes d'enroulements de moteur (7) et les moyens de commande de moteur comprennent un nombre correspondant de dispositifs de commande de moteur,
où l'agencement de direction est configuré de sorte que les dispositifs de commande de moteur assurent une redondance totale sur la détection de position avec le moteur électrique (11),
où un capteur d'angle (10) est prévu en plus du détecteur d'angle, le capteur d'angle (10) détectant un angle de braquage donné par le dispositif d'instruction de direction (1) directement au dispositif d'instruction de direction (10),
où la roue (2) a en outre une jante (5), où la jante (5) coopère avec le moteur électrique (11) et l'arbre (3) coopère avec le capteur d'angle (10), et où le capteur d'angle (10) est situé radialement à l'intérieur des enroulements de moteur (7).

2. Agencement de direction selon la revendication 1, **caractérisé en ce que** les propriétés magnétiques sont dérivées par une mesure de tension et/ou de courant.

3. Agencement de direction selon la revendication 1 ou 2, **caractérisé en ce que** les moyens de commande de moteur comprennent un mode de conduite dans lequel le moteur électrique (11) est alimenté en énergie électrique.

4. Agencement de direction selon l'une des revendications 1 à 3, **caractérisé en ce que** le moteur électrique (11) a au moins douze paires de pôles.

5. Agencement de direction selon l'une des revendications 1 à 4, **caractérisé en ce que** le capteur d'angle (10) comprend un agencement émetteur/récepteur fixé au boîtier (4) et un assemblage cible qui est fixé de manière rotative au dispositif d'instruction de direction (1) et comprend un agencement de réaction passif.

6. Agencement de direction selon l'une des revendications 1 à 5, **caractérisé en ce que** le moteur électrique (11) est un moteur à courant continu sans balais.
